# EUROPEAN PATENT SPECIFICATION

(11) **EP 2 065 631 B1**
(45) Date of publication and mention of the grant of the patent: **27.10.2010**
(21) Application number: 07121748.3
(22) Date of filing: 28.11.2007
(51) Int. Cl.: F16L 55/164, F16L 58/10

(54) **Internally coating a pipe or a pipe system**
Interne Beschichtung eines Rohrs oder Rohrsystems
Revêtement interne d'un tuyau ou système de tuyau

(43) Date of publication of application: 03.06.2009
(73) Proprietor: HWQ Relining System AB, 169 50 Solna (SE)
(72) Inventor: Håkansson, Stefan, 113 46 Stockholm (SE)
(74) Representative: Nilsson, Brita Linnea

(56) References cited:
- EP-A- 0 299 134
- WO-A-90/12657
- US-A- 4 060 655
- US-A- 4 327 132
- US-A- 5 622 209
- US-A1- 2004 110 450

## Description

### FILED OF THE INVENTION

The present invention relates to the field of internally coating a pipe or a system of pipes with a thermosetting material.

### BACKGROUND

Piping systems made of metal and plastic are among others used as hot water pipes, cold water pipes, portable water pipes, natural gas pipes, drain pipes, and fire sprinkler system pipes, and the like. Such piping systems are used in commercial buildings, apartment buildings, homes and the like, where they eventually develop problems. These problems can be due to destructive effects of liquids and gases such as corrosion and erosion as well as blockage due to mineral deposits. These destructive effects can lead to water leaks if the piping systems are not changed or repaired. In order to change the pipes one often has to tear down parts of the building, such as kitchens and bath-rooms, in order to access the old pipes. This is of course very time consuming and costly.

To clean pipes by blowing abrasive materials is previously known. EP 0299134 describes a method of cleaning pipes and internally coating them with an adhesive resin. This method can take several days to perform.

Not being able to use the pipes for several days is of course almost always a problem and a faster method would be highly desirable.

It is also highly desirably that the internal coating withstands high stresses such as frequent use, corrosive agents and high temperatures.

US 2004/0110450, describes a method and a system for renovating pipes and then coating them with a suitable coating material using pressure and vacuum. The combination of pressure and vacuum at opposite ends of a pipe section provide the air flow and volume needed to adequately clean the inside of the pipe using abrasive particles and thereby avoiding the risk of blockages.

US 5 622 209, describes a process for sealing, cleaning and re-coating the internal walls of utility water conduits. It is optimised as an overall process and therefore also leads to rapid and reliable results. Compressed air charged with particles of an abrasive substance is blown through the pipes. Coating takes place by blowing in a solvent-free epoxy resin containing hardener and fibres.

The up to now used coating materials are two-component materials which are mixed at the place of use. Hardened, finished polymers are almost always non-toxic while uncured resin components can be harmful. This method therefore constitutes a risk concerning the persons working with the method as well as for the environment. It is also difficult to ensure a high and even quality level since the material is applied while it is curing.

Thus, there is room for improvement with regard to the drawbacks encountered with the presently used methods for coating existing piping systems.

### SHORT DESCRIPTION OF THE INVENTION

The present invention provides an alternative way of internally coating a pipe or a system of pipes. The method of the present invention is particularly useful for renovating pipes or system of pipes.

By using the method of the present invention a pre-mixed liquid coating material can be used. The method takes 6-12 hours to perform and complete and results in a strong chemically, mechanically and thermally resistant coating of the interior of the pipe/pipes or system of pipes.

The method according to the invention comprises the steps of drying the pipe by a flow-through of dehumidified, compressed air followed by cleaning said pipe by pumping a mixture of compressed air and particles of an abrasive material, such as sand or aluminium oxide, through the pipe and blowing compressed air at a controlled flow together with a liquid thermosetting coating material comprising a curing agent into the pipe so that a coating layer is applied onto the interior walls of the pipe, followed by blowing compressed heated air through the pipe in order to raise the temperature of the thermosetting coating material to a temperature at, or exceeding, the curing temperature of the thermosetting coating material, e. g. to a temperature of 80-270°C.

### SHORT DESCRIPTION OF THE DRAWINGS

Figure 1 shows an example of a cold water piping system with a closing valve in the basement and a connecting pipe on each storey in a four-storied house.
(A) = Connection pipe storey 4
(B) = Connection pipe storey 3
(C) = Connection pipe storey 2
(D) = Connection pipe storey 1
(E) = The piping system connected on the ground-floor/in the basement

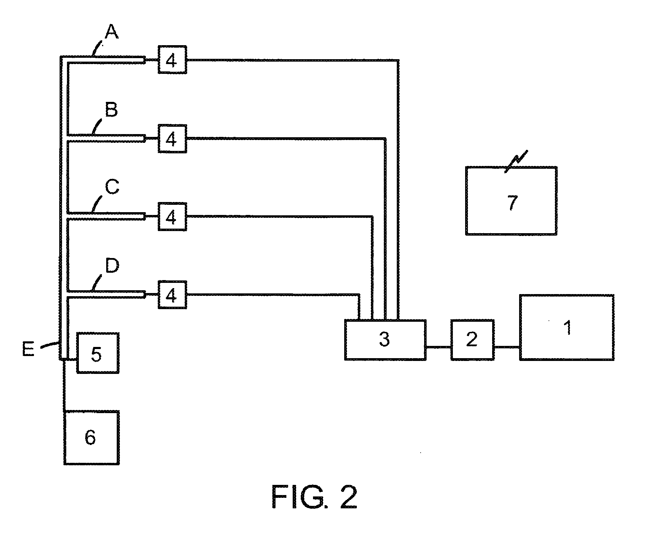

Figure 2 shows a connection system used in the present method. (1) is a compressor; (2) a pre-heater; (3) an air-distributor with a container for compressed air. A-E each indicates a storey. (4) is an air-heater with a controllable regulation; (5) is a temperature sensor; (6) is a filter, and (7) is a computer. The different units of the connection system are connected with the piping system and each other by means of hoses.

### DETAILED DESCRIPTION

The present invention provides a method of internally coating a pipe or a system of pipes.

The method according to the present invention comprises the steps of drying the pipe by a flow-through of dehumidified, compressed air followed by;
cleaning said pipe by pumping a mixture of compressed gas and particles of an abrasive material through the pipe, and;
blowing compressed air at a controlled flow together with a liquid thermosetting coating material comprising at curing agent into the pipe so that a coating layer is applied onto the interior walls of the pipe followed by;
blowing compressed heated air through the pipe in order to raise the temperature of the thermosetting coating material to a temperature at, or exceeding, the curing temperature of the thermosetting coating material.

By heating the pipe after the coating material has been applied one can use coating materials that have curing temperatures above ambient temperature. Thermosetting plastics that cure at higher temperatures usually do so faster than those that cure at ambient temperature. They also often have desired properties such as strength and durability. Examples of thermosetting plastics are polyurethane, acrylic plastic, polyether and vinyl esther.

In a first embodiment of the invention the pipe is a system of pipes.

In a second embodiment of the invention the system of pipes is selected from the group consisting of a gutter pipe, a rain pipe, a sewage pipe, a hot water pipe, a cold water pipe, a drain pipe, a portable water pipe, a natural gas pipe, and a fire sprinkler system pipe.

In a third embodiment of the invention the thermosetting coating material comprises an epoxy resin. The epoxy resin can for example be any epoxy resin such as an epoxy novolac or a low molecular weight epoxy resin based on Bisfenol A or Bisfenol B and epichlorohydrin,

In a forth embodiment of the invention the curing agent is inactive at ambient temperature or lower temperature. Examples of such curing agents are dicyandiamide, borotrifluoride-amine complex and acid anhydrides. Since the curing agent is inactive at ambient temperature components of the coating material can be pre-mixed in advance under controlled forms, e.g. in a factory, and does not have to be mixed on site. The method is thereby simplified, the quality of the product increases and the health risks for the person carrying out the method decreased. It is also safer from an environmental point of view.

In a fifth embodiment of the invention the curing temperature is in the range of 80-250°C, for example in the range of 80-200°C, or for example in the range of 80-160°C.

In a sixth embodiment of the invention the epoxy resin is a low molecular weight epoxy resin.

In a seventh embodiment of the invention the pipe that can be internally coated by the method of the invention has a diameter in the range of 5-40 mm.

In an eight embodiment of the invention the pipe is ready for intended use in 6 to 12 hours. The method according to the present invention should be possible to carry out during this time and the coating layer should have had time to cure. In practise this means that a piping system can be fixed and ready for use in a day.

In a ninth embodiment of the invention the steps iii) and iv) are repeated one or more times. The pipes will thereafter have an internal coating comprising several coating layers.

In a tenth embodiment of the invention the completed internal coating of the pipe is checked by pressure tests and optical tests using fibre optics.

The term pipes in this description include all possible types of pipes or parts of pipes for liquids and gases such as those described in the background. By the term piping system is in this description meant a number of pipes connected in a system, such as a system of pipes comprising a main pipe in a building that branches off into different pipes going to different locations such as kitchens and bathrooms. The invention is explained by way of an example but should not be limited thereto.

### Equipment

**Compressor** (1): Should preferably deliver 0.8 MPa (8 bar) pressure. The compressor should be able to deliver dehumidified and oil-free air. The flow is determined by the diameter of the pipe according to the table below.

| Maximal pipe diameter (mm) | Minimum flow (m³) |
|---|---|
| 25 | 7.5 |
| 40 | 14 |
| 50 | 17 |
| 80 | 26 |
| 100 | 30 |

**Pre-heater** (2): A pre-heater is connected after the compressor to give the system a constant temperature of 50°C. By keeping the system at the same temperature one gets a more stabile process disregarding the out-door temperature.

**Air-distributor with a container for compressed air** (3): A container for compressed air with several exit valves and controllable pressure is used to distribute the air and to prevent pressure variations in the system.

**Air-heater with controllable regulation** (4): Air-heater with controllable heating and controllable flow valves. The heaters have intrinsic temperature and flow sensors that send signals to a computer which in turn controls temperature and flow from the air-heaters. **Temperature sensor and flow sensor** (5): On the water/heating-system is placed a temperature and flow-sensor which sends signals to the computer.

Filter (6): The filter is connected at the end of the system and it cleans the out-flow from particles and dust.

**Computer** (7): A computer with a soft-ware that controls the heaters after receiving signals from the sensors.

Hoses, connections: The connections between the equipment and the water/heating-system that is to be renovated are pressure air hoses and connections of different dimensions that are heat-isolated and adapted for sand blasting.

### Example of a piping system

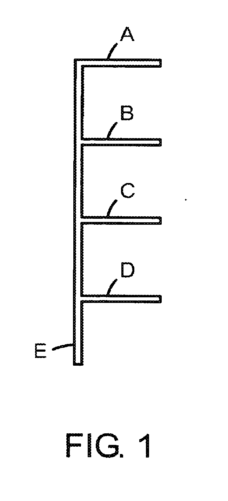

An example of a cold water piping-system from the closing valve in the basement with a connection tube on each floor in a four-storied house (see Fig. 1).

### Connection of the system

The compressor (1) is via a hose connected to a pre-heater (2), which in turn is connected to an air-distributor with a container for compressed air (3). From the air-distributor with the container for compressed air (3) goes a hose to every storey where they are connected to air-heaters with controllable regulation (4). There are air-heaters with controllable regulation on each storey, each having a hose from the air-distributor with a container for compressed air. Air-heaters with controllable regulation (4) are connected via hoses to the connection pipes (A-E) on each storey. The connection pipe of the piping system on the ground-floor/in the basement (E) is via a hose connected to the filter (6). On the connection pipe of the piping systems on the ground-floor/in the basement (E) is the temperature sensor (5) attached. A computer (7), placed at a chosen location in the vicinity of the system can communicate preferably wire-less with all the sensors.

### Method

**Drying**: By blowing dehumidified warm air (approximately 60°C) through the whole piping system the pipes are dried until completely dry. This results in deposits of the pipes becoming porous and that no particles of the abrasive material used to blast the pipes get caught in the pipes.

**Blasting**: Blasting material is dosed into each cutting off of the piping system and is blasted inside the pipe until all deposits are gone. Different pressures and different abrasive materials are used for blasting the pipes depending on the material and the condition of the pipe. Examples of abrasive materials than can be used is glass beads, aluminium oxide, sand, steel grit and steel shots. The pressure can for examples be 0.2-0.4M MPa (2-4 bar) when blasting copper pipes and 0.2-0.6 MPa (2-6 bar) when blasting iron, galvanized and steel pipes. The inside of the pipe is examined by fibre optics at regular intervals throughout the whole process. All material removed is collected in the filter and dirt will at no time be in contact with the building or the apartments.

**Coating**: The liquid thermosetting coating material may comprise materials such as a thermosetting material, a curing agent, fibres and a thickening agent. A person skilled in the art can easily think of other materials suitable for such a purpose. The coating material is blown into every cutting off of the piping system and is evenly spread with a controlled flow onto the inside of the piping system. The thickness of the plastic can be varied depending on the flow and the temperature. The flow and the temperature used have to be varied depending on the type of pipe or system of pipes that is going to be internally coated by the method of the invention. A person skilled in the art can easily adapt the flow and the temperature accordingly.

**Curing**: The liquid thermosetting coating material is cured by blowing compressed air through the air-heaters which in turn blow heated, compressed air into every cutting off of the piping system. The thermosetting coating material cures at a temperature in the range of 80-250°C, for example at a temperature in the range of 80-200°C, or for example at a temperature in the range of 80-160°C. Depending on the coating material, one has to use different temperatures to achieve curing. The previously mentioned thermosetting coating materials have activation temperatures for curing in the range of 80-150°C. The air-heaters have electric controlling in order to give a correct heating independent of the flow and temperature of the incoming air. At the end of the system there is a temperature sensor which is used to control the temperature. By measuring the temperature at the end of the system, which is the coldest point of the system, the heat loss of the system can be calculated and the temperature of the flow of heated, compressed air can be adjusted so that the lowest temperature for curing is reached within the whole system.

The flow is regulated to a constant flow during curing to obtain a desired thickness of 0.2-0.6 mm of the coating material. The container for compressed air evens out possible variations in the system and also has a regulator/vent which provides the air-heaters with a desired flow. A regulator/vent is used on every cutting off and at the end of the piping system.

The coating and the curing steps can be repeated to obtain a thicker coating layer.

The ratio between the heat loss of the piping system and the flow in the pipes of the piping system is specific for each piping system. Depending on the flow that is needed to achieve the minimal temperature though the piping system, the build up of the coating material can be adopted and the thickness of the coating material can be regulated.

**Controls**: Both pressure tests and optical examinations with fibre optics can be used to ensure that the coating material has completely covered the piping system and that the system does not leak during pressure. The pipe can be in normal use again 6-12 hours after the initiation of the coating process.

### Example 1:

A copper pipe with a diameter of 22 mm and a length of 3 m can be coated internally by the method according to the present invention. The coating material can be a pre-mixed two-component epoxy comprising Bisfenol A at 88% by weight, titanium dioxide at 2% by weight and dicyandiamide at 10% by weight. The liquid coating material should be heated to 60°C at the same time as the pipe is heated to 60°C, to ensure a correct flow when the coating material is blown through the pipe. The liquid coating material should be blown through the pipe at an air-temperature of 60°C and a flow of 0.5 m³/min. When the coating material has wandered through the pipe the flow should be lowered to 0.3 m³/min at the same time as the temperature is raised to 170°C. A temperature sensor at the end of the pipe shows when the temperature has reached the curing temperature of 150°C. The coating material is allowed to cure for 30 min at the curing temperature, after which the pipe is cooled by blowing compressed air through it. An evenly formed plastic coating of 0.34 mm, which completely covers the interior of the pipe, has been formed.

## Claims

1. A method of internally coating a pipe comprising the steps of;
i) drying the pipe by a flow-through of dehumidified, compressed air followed by;
ii) cleaning said pipe by pumping a mixture of compressed air and particles of an abrasive material through the pipe and;
iii) blowing compressed air at a controlled flow together with a liquid thermosetting coating material comprising a curing agent into the pipe so that a coating layer is applied onto the interior walls of the pipe; **characterized in that** it is followed by
iv) blowing compressed heated air through the pipe in order to raise the temperature of the thermosetting coating material to a temperature at, or exceeding, the curing temperature of the thermosetting coating material.

2. The method according to claim 1, wherein the pipe is a system of pipes.

3. The method according to claim 2, wherein the system of pipes is selected from the group consisting of a gutter pipe, a rain pipe, a sewage pipe, a hot water pipe, a cold water pipe, a drain pipe, a portable water pipe, a natural gas pipe, and a fire system sprinkler pipe.

4. The method according to claim 1, wherein the thermosetting coating material comprises an epoxy resin.

5. The method according to claim 1, wherein the curing agent is inactive at ambient temperature or lower temperature.

6. The method according to claim 1, wherein the temperature in step iv) is in the range of 80-250°C.

7. The method according to claim 4, wherein the epoxy resin is a low molecular weight epoxy resin.

8. The method according to claim 1, wherein the pipe has a diameter in the range of 5-40 mm.

9. The method according to any of claims 1-7, wherein the pipe is ready for intended use in 6 to 12 hours.

10. The method according to claim 1, wherein the steps iii) and iv) are repeated one or more times.

11. The method according to claim 1, wherein the completed internal coating of the pipe is checked by pressure tests and optical tests using fibre optics.

## Patentansprüche

1. Verfahren zur internen Beschichtung eines Rohrs, wobei das Verfahren die folgenden Schritte umfasst:
i) Trocknen des Rohrs durch Durchleiten entfeuchteter Druckluft, gefolgt von:
ii) Reinigen des Rohrs durch Durchpumpen eines Gemisches aus Druckluft und Partikeln eines abrasiven Materials durch das Rohr; und
iii) Einblasen von Druckluft mit kontrollierter Strömung zusammen mit einem einen Härter umfassenden flüssigen wärmehärtenden Beschichtungsmaterial in das Rohr, so dass an den Innenwänden des Rohrs eine Auskleidungsschicht aufgebracht wird, **dadurch gekennzeichnet, dass** anschließend der folgende Schritt erfolgt:
iv) Durchblasen erwärmter Druckluft durch das Rohr, um die Temperatur des wärmehärtenden Beschichtungsmaterials auf eine Temperatur zu erhöhen, die der Aushärtungstemperatur des wärmehärtenden Beschichtungsmaterials entspricht oder diese übersteigt.

2. Verfahren nach Anspruch 1, bei dem das Rohr ein Rohrsystem ist.

3. Verfahren nach Anspruch 2, bei dem das Rohrsystem aus der Gruppe ausgewählt ist, die aus einem Abflussrohr, einem Regenrohr, einem Kanalrohr, einem Heißwasserrohr, einem Kaltwasserrohr, einem Ablaufrohr, einem Trinkwasserrohr, einem Erdgasrohr und einem Löschwassersprinklerrohr besteht.

4. Verfahren nach Anspruch 1, bei dem das wärmehärtende Beschichtungsmaterial ein Epoxidharz umfasst.

5. Verfahren nach Anspruch 1, bei dem der Härter bei Umgebungstemperatur oder niedrigerer Temperatur inaktiv ist.

6. Verfahren nach Anspruch 1, bei dem die Temperatur in Schritt iv) im Bereich von 80 - 250°C liegt.

7. Verfahren nach Anspruch 4, bei dem das Epoxidharz ein Epoxidharz mit niedrigem Molekulargewicht ist.

8. Verfahren nach Anspruch 1, bei dem das Rohr einen Durchmesser im Bereich von 5 - 40 mm hat.

9. Verfahren nach einem der Ansprüche 1 - 7, bei dem das Rohr in 6 - 12 Stunden für die beabsichtigte Verwendung einsetzbar ist.

10. Verfahren nach Anspruch 1, bei dem die Schritte iii) und iv) einmal oder mehrere Male wiederholt werden.

11. Verfahren nach Anspruch 1, bei dem die fertige interne Beschichtung des Rohrs durch Drucktests und optische Tests unter Einsatz von Lichtleitfasern überprüft wird.

## Revendications

1. Procédé de revêtement interne d'un tuyau, comprenant les étapes qui consistent à :
i) sécher le tuyau en faisant circuler dans celui-ci de l'air comprimé déshumidifié, et ensuite à ;
ii) nettoyer ledit tuyau en faisant circuler par pompage un mélange d'air comprimé et de particules d'un matériau abrasif dans le tuyau et ;
iii) souffler dans le tuyau de l'air comprimé à un débit contrôlé conjointement avec un matériau de revêtement thermodurcissable comprenant un agent de durcissement, de sorte qu'une couche de revêtement soit appliquée sur les parois intérieures du tuyau ; **caractérisé en ce que** cette étape est suivie de l'étape qui consiste à
iv) souffler dans le tuyau de l'air comprimé chauffé afin d'élever la température du matériau de revêtement thermodurcissable jusqu'à une température égale à, ou dépassant, la température de durcissement du matériau de revêtement thermodurcissable.

2. Procédé selon la revendication 1, dans lequel le tuyau est un système de tuyaux.

3. Procédé selon la revendication 2, dans lequel le système de tuyaux est sélectionné dans le groupe constitué d'une descente de gouttière, d'une descente d'eaux pluviales, d'un tuyau d'égout, d'un tuyau d'eau chaude, d'un tuyau d'eau froide, d'un tuyau de drainage, d'un tuyau d'eau mobile, d'un tuyau de gaz naturel, et d'un tuyau de gicleur d'un système anti-incendie.

4. Procédé selon la revendication 1, dans lequel le matériau de revêtement thermodurcissable comprend une résine époxyde.

5. Procédé selon la revendication 1, dans lequel l'agent de durcissement est inactif à la température ambiante ou à une température plus basse.

6. Procédé selon la revendication 1, dans lequel la température à l'étape iv) est de 80 à 250 °C.

7. Procédé selon la revendication 4, dans lequel la résine époxyde est une résine époxyde de faible masse moléculaire.

8. Procédé selon la revendication 1, dans lequel le tuyau a un diamètre de 5 à 40 mm.

9. Procédé selon l'une quelconque des revendications 1 à 7, dans lequel le tuyau est prêt pour l'usage auquel il est destiné en 6 à 12 heures.

10. Procédé selon la revendication 1, dans lequel les étapes iii) et iv) sont répétées une ou plusieurs fois.

11. Procédé selon la revendication 1, dans lequel le revêtement interne du tuyau, une fois terminé, est contrôlé par des tests sous pression et des tests optiques utilisant des fibres optiques.
